# EUROPÄISCHE PATENTSCHRIFT

(11) **EP 1 153 209 B1**
(45) Veröffentlichungstag und Bekanntmachung des Hinweises auf die Patenterteilung: **28.05.2003**
(21) Anmeldenummer: 00916847.7
(22) Anmeldetag: 17.02.2000
(51) Int. Cl.: F02B 27/02

(54) **ANSAUGVORRICHTUNG**
ADMISSION DEVICE
DISPOSITIF D'ASPIRATION

(30) Priorität: 18.02.1999 DE 19906787
(43) Veröffentlichungstag der Anmeldung: 14.11.2001
(73) Patentinhaber: FILTERWERK MANN + HUMMEL GmbH, 71631 Ludwigsburg (DE)
(72) Erfinder: PAFFRATH, Holger, D-50259 Pulheim (DE)
(74) Vertreter: Voth, Gerhard, Dipl.-Ing.
(86) Internationale Anmeldenummer: EP0001341
(87) Internationale Veröffentlichungsnummer: WO00049280

(56) Entgegenhaltungen:
- EP-A- 0 237 755
- EP-A- 0 551 209
- WO-A-98/35146
- US-A- 4 617 897

## Beschreibung

Die Erfindung betrifft eine Ansaugvorrichtung nach dem Oberbegriff des Hauptanspruchs.

Eine solche Ansaugvorrichtung ist beispielsweise aus der DE OS 39 21 081 bekannt. Die bekannte Vorrichtung für eine Mehrzylinderbrennkraftmaschine weist einen zylindrischen Ansaugverteilerraum und zu den einzelnen Zylindern führende Einzelsaugrohre auf, die um den Ansaugverteilerraum herum geführt und in Längsrichtung desselben nebeneinander angeordnet sind. Zur Erzielung von zwei unterschiedlichen Schwingrohrlängen steht jedes einzelne Saugrohr mit dem Ansaugverteilerraum über zwei in einem Winkelabstand voneinander in der Umfangswand des Ansaugverteilerraums vorgesehene Steueröffnung in Verbindung. In dem Ansaugverteilerraum ist ein rohrförmiger Drehschieber angeordnet, der für jedes Einzelsaugrohr mindestens einen Steuerschlitz aufweist. Dieser Steuerschlitz steht in einer Endstellung des Drehschiebers mit der ersten Steueröffnung in Verbindung, während die andere Steueröffnung von der Wand des Drehschiebers abgedeckt ist. Dadurch wird eine lange Schwingrohrlänge verwirklicht. Wird der Drehschieber in seine andere Endstellung gedreht, so wird die erste Steueröffnung von der Wand des Drehschiebers abgedeckt, der Steuerschlitz kommt mit der zweiten Steueröffnung in Verbindung, wodurch eine kurze Schwingrohrlänge eingestellt wird.

Ein Nachteil dieser bekannten Einrichtung ist darin zu sehen, dass keine stufenlose Einstellmöglichkeit für die Schwingrohrlänge gegeben ist. Dies bedeutet, dass ein Optimum an Leistungsausbeute nur in zwei eng begrenzten Drehzahlbereichen der Brennkraftmaschine möglich ist.

Es ist weiterhin aus der DE-PS 34 46 377 eine Ansaugvorrichtung für eine Kolbenbrennkraftmaschine bekannt. Auch dort ist ein Drehschieber angeordnet, der die Ansaugrohrlänge variabel verändert. Diese Vorrichtung ist jedoch konstruktiv sehr aufwendig und weist strömungstechnische Nachteile auf.

Die EP 0 728 918 B1 beschreibt eine Ansaugvorrichtung gemäß Anspruch 1, erster Teil, mit einem Drehschieber, wobei eine Zylinderwand Durchbrüche aufweist und der Drehschieber derart gestaltet ist, dass in jeder Stellung der volle Rohrquerschnitt zur Verfügung steht. Ein Nachteil dieses Systems ist darin zu sehen, dass lediglich eine Rohrlängenverstellung möglich ist, der Rohrquerschnitt jedoch in jeder Lage konstant bleibt.

Der Erfindung liegt die Aufgabe zugrunde, eine Ansaugvorrichtung zu schaffen, die die oben genannten Nachteile vermeidet und auch hinsichtlich der Variabilität des Rohrquerschnitts eine Lösung bietet. Außerdem soll die Ansaugvorrichtung insbesondere im Kunststoffspritzgießverfahren einfach herstellbar sein.

Die Aufgabe wird ausgehend von dem Oberbegriff des Hauptanspruchs durch dessen kennzeichnende Merkmale gelöst.

Der wesentliche Vorteil der Erfindung ist darin zu sehen, dass der in den Ansaugverteilerraum erstreckende Ansaugstutzen sowohl die Rohrlänge als auch den Rohrquerschnitt jedes einzelnen Saugrohres variiert. Damit wird ein Leistungsnachteil für den Motor im oberen Motordrehzahlbereich vermieden. Gleichzeitig wird im Falle der längsten Rohrlänge der Rohrquerschnitt verringert. Diese Verringerung ist im niederen Drehzahlenbereich erforderlich um die akustischen Eigenschaften des Systems zu verbessern, das heißt die Ansauggeräusche zu dämmen.

Gemäß der Erfindung wird vorgeschlagen, in der Stellung der längsten Rohrlänge eine Blende vorzusehen, die wenigstens einen Teil des Rohrquerschnittes des Ansaugstutzens überdeckt. Diese Blende ist starr angeordnet. Durch die Drehung des Ansaugstutzens verringert die Blende je nach Stellung des Ansaugstutzens dessen Rohrquerschnitt.

Die Blende wird durch das Gehäuse der Ansaugvorrichtung gebildet. Damit sind keine zusätzlichen Elemente erforderlich.

Zur exakten Definition des Rohrquerschnitts im unteren Drehzahlenbereich, weist der Ansaugstutzen eine Trennwand auf. Diese teilt den Querschnitt in zwei oder mehrere Teilquerschnitte. Durch diese Trennwand wird eine präzise Luftführung erzielt.

Weiterbildungsgemäß kann die Trennwand im äußeren Mündungsbereich strömungsgünstig gebogen sein oder eine entsprechende strömungsgünstige Form aufweisen.

Zur Bildung unterschiedlicher Resonanzsysteme können die Einzelsaugrohre mit Resonanzklappen untereinander verbunden sein. Diese Klappen sind stufenlos offen oder schließbar. Selbstverständlich besteht auch die Möglichkeit, die Klappen mit einem einfachen Stellantrieb in Auf- oder Zustellung zu schwenken.

Eine besonders einfache Antriebsart für den Ansaugstutzen besteht in der Anwendung eines Elektromotors. Dieser Elektromotor erhält Signale von der Steuerung des Motormanagements. Der Elektromotor kann unmittelbar auf der Drehachse für den Ansaugstutzen angeordnet sein.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eine Ausführungsbeispieles näher dargestellt. Es zeigt
- Figur 1: die schematische Schnittdarstellung einer Ansaugvorrichtung in der Leistungsstellung,
- Figur 2: die in Figur 1 gezeigte Ansaugvorrichtung in einer mittleren Stellung und
- Figur 3: die in Figur 1 gezeigte Ansaugvorrichtung in der Drehmomentstellung.

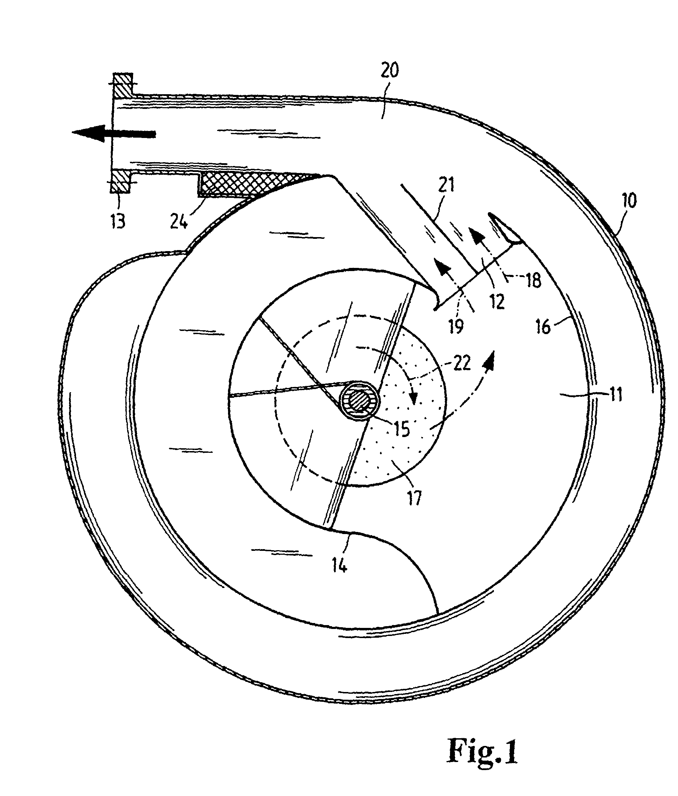

Figur 1 zeigt in einer schematischen Darstellung, ein Ansaugsystem bestehend aus einem Gehäuse 10, einem Luftsammelraum oder Ansaugverteilerraum 11 und einem drehbar angeordneten Ansaugstutzen 12.

An dem Gehäuse 10 befindet sich ein Anschlussflansch 13, mit welchem dass Ansaugsystem an eine hier nicht dargestellten Kolbenbrennkraftmaschine angeflanscht werden kann. Der Ansaugstutzen 12 ist mit einer Trägerstruktur 14 auf einer Achse 15 befestigt. Diese Achse wird von einem hier nicht dargestellten Elektromotor bewegt. Zwischen dem Luftsammelraum 11 und dem Gehäuse 10 befindet sich eine Trennwand 16, die mit dem Ansaugstutzen 12 gemeinsam gedreht wird. Die im Luftsammelraum 11 über die Öffnung 17 zugeführte Ansaugluft strömt gemäß den Pfeilen 18, 19 in den Ansaugstutzen 12 und von dort zu dem Einzelsaugrohr 20 und über den Anschlussflansch 13 in die Brennkraftmaschine. Der Ansaugstutzen 12 weist eine Trennwand 21 auf. Diese Trennwand ist in der gezeigten Stellung unerheblich, sie teilt lediglich den Luftstrom in zwei Teilströme. Die über die Öffnung 17 in den Luftsammelraum 11 einströmende Luft gelangt in der hier gezeigten Stellung über eine kurze Ansauglänge zu der Brennkraftmaschine. Im oberen Motordrehzahlenbereich führt diese kurze Ansauglänge zu einer Leistungssteigerung. Im mittleren und niederen Drehzahlenbereich ist es zweckmäßig, die Ansauglänge zu vergrößern. Hierzu wird der Ansaugstutzen mit der Trägerstruktur 14 in Richtung des Pfeils 22 gedreht.

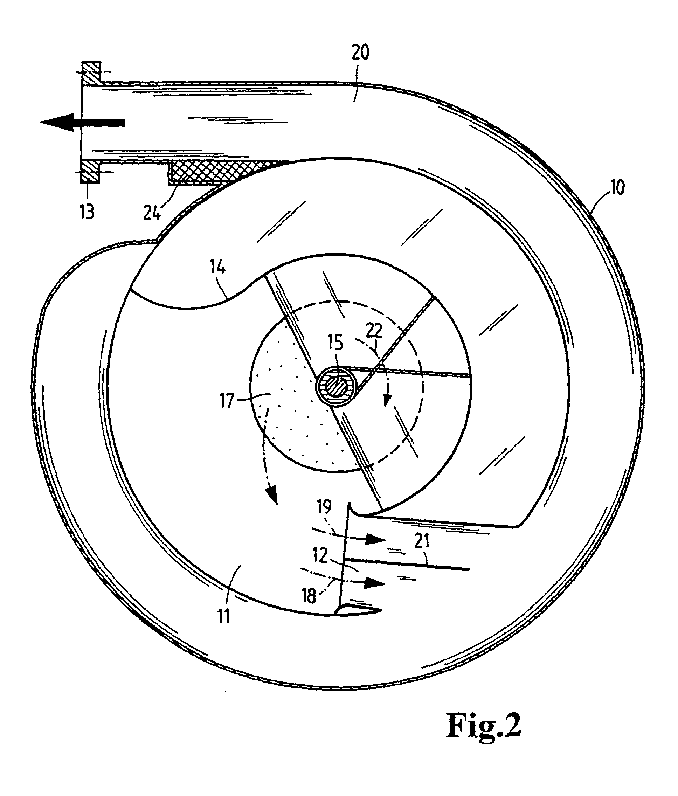

Figur 2 zeigt, dass der Ansaugstutzen 12 eine mittlere Lage eingenommen hat. Der Querschnitt des Ansaugstutzens 12 ist unverändert.

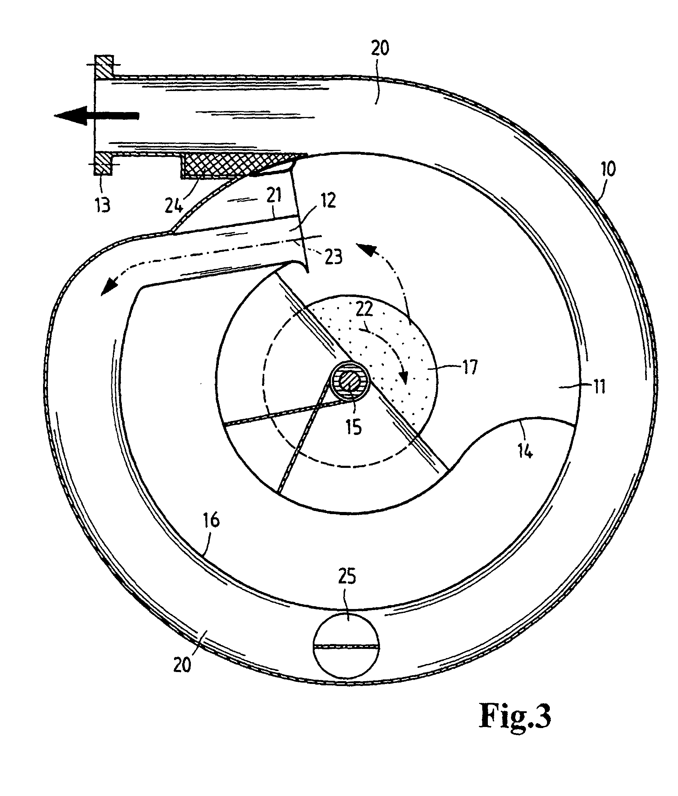

Figur 3 zeigt die Stellungen des Ansaugstutzens 12, bei der eine Reduzierung des Schwingrohrquerschnittes erfolgt.

Der oberhalb der Trennwand 21 sich befindende Teilquerschnitt des Ansaugstutzens 12 ist gem. Figur 3 geschlossen, lediglich der unterhalb der Trennwand 21 vorhandene Teilquerschnitt ist geöffnet. Durch diesen strömt die Ansaugluft gemäß dem Pfeil 22 in das Einzelsaugrohr 20 ein und legt den Gesamtweg in diesem Einzelsaugrohr zurück, bis sie zu der Kolbenbrennkraftmaschine gelangt. Selbstverständlich besteht die Möglichkeit den Ansaugstutzen 12 auf der Trägerstruktur 14 gemäß dem Pfeil 22 noch weiter zu drehen. In diesem Fall würde der Ansaugquerschnitt noch weiter reduziert.

Die Reduktion des Ansaugquerschnittes kann durch diese Maßnahme optimal an die Brennkraftmaschine angepasst werden. Vor allem lassen sich dadurch die akustischen Eigenschaften des Systems verbessern. Die Abdichtung zwischen dem Einzelsaugrohr 20 und der Trägerstruktur 14 erfolgt über geeignete Dichtmittel 24. Die nebeneinanderliegenden Einzelsaugohre können mit geeigneten Resonanzklappen 25 miteinander verbunden werden. Die Anwendung solcher Resonanzklappen ist allgemein bekannt und braucht hier nicht näher erläutert zu werden.

## Patentansprüche

1. Ansaugsystem für eine Kolbenbrennkraftmaschine mit mehreren Zylindern mit einem Ansaugverteilerraum und mit zu den einzelnen Zylindern führenden Einzelsaugrohren, die in Längssrichtung desselben nebeneinander angeordnet sind, wobei das Ansaugsystem ein Gehäuse (10) besitzt, und wobei ein drehbarer, in den Ansaugverteilerraum (11) sich erstreckender Ansaugstutzen (12) vorgesehen ist und mit diesem Ansaugstutzen (12) sowohl die Rohrlänge als auch der Rohrquerschnitt jedes Einzelsaugrohres (20) variierbar ist, wobei in der Stellung der längsten Rohrlänge eine Blende vorgesehen ist, die wenigstens einen Teil des Rohrquerschnitts des Ansaugstutzens überdeckt, **dadurch gekennzeichnet, dass** die Blende (26) durch das Gehäuse (10) der Ansaugvorrichtung gebildet ist und der Ansaugstutzen (12) eine Trennwand (16) aufweist, die den Querschnitt in zwei oder mehrere Teilquerschnitte unterteilt.

2. Ansaugvorrichtung nach Anspruch 1, **dadurch gekennzeichnet, dass** die Trennwand (16) im äußeren Mündungsbereich strömungsgünstig gebogen ist.

3. Ansaugvorrichtung nach einem der vorherigen Ansprüche, **dadurch gekennzeichnet, dass** die Einzelsaugrohre (20) mit Resonanzklappen (25) untereinander verbunden sind.

4. Ansaugvorrichtung nach einem der vorherigen Ansprüche, **dadurch gekennzeichnet, dass** der Ansaugstutzen (12) elektromotorisch ansteuerbar ist.

## Claims

1. Admission system for a piston combustion engine with several cylinders, with an intake manifold and with individual intake pipes guiding to each cylinder which are arranged side by side in the direction of the length of the said intake manifold ; whereby the admission system comprises a housing (10) and whereby a rotatable intake socket (12), which extends into the intake manifold (11), is provided and whereby the pipe length as well as the pipe cross section of each individual intake pipe (20) can be modified with this intake socket (12); whereby a screen is provided in the position of the longest pipe length , **characterised in that** the screen (26) is built by the housing (10) of the admission device and **in that** the intake socket (12) comprises a separation wall (16) which subdivides the cross section into two or several partial cross sections.

2. Admission device according to claim 1, **characterised in that** the separation wall (16) is curved in the external orifice area in a manner to obtain an optimum flow pattern.

3. Admission device according to one of the preceding claims, **characterised in that** the individual intake pipes (20) are connected together via resonance flaps (25).

4. Admission device according to one of the preceding claims, **characterised in that** the intake socket (12) can be motor-actuated.

## Revendications

1. Système d'aspiration pour une machine à combustion interne à piston dotée de plusieurs cylindres avec une chambre de répartition de l'aspiration et avec des tubes d'aspiration individuels conduisant aux différents cylindres ; lesquels tubes individuels sont disposés l'un à coté de l'autre dans la direction longitudinale de ladite chambre de répartition de l'aspiration ; le système d'aspiration possédant un boitier (10) et un manchon d'aspiration (12) rotatif étant prévu, lequel s'étend dans la chambre de répartition de l'aspiration ; la longueur de tube ainsi que la section transversale du tube de chaque tube d'aspiration (20) pouvant etre variée avec ce manchon d'aspiration (12) ; un écran étant prévu dans la position de la longueur de tube la plus longue qui recouvre au moins une partie de la section transversale du tube, **caractérisé en ce que** l'écran (26) est formé par un boitier (10) du dispositif d'aspiration et **en ce que** le manchon d'aspiration (12) comporte une paroi de séparation (16) subdivisant la section transversale en deux ou plusieurs sections transversales partielles.

2. Dispositif d'aspiration selon la revendication 1, **caractérisé en ce que** la paroi de séparation (16) est courbée dans la zone de l'embouchure extérieure de façon favorable au flux.

3. Dispositif d'aspiration selon une des revendications précédentes, **caractérisé en ce que** les tubes d'aspiration individuels (20) sont reliés entre eux par des clapets de résonance (25).

4. Dispositif d'aspiration selon une des revendications précédentes, **caractérisé en ce que** les manchons d'aspiration (12) peuvent etre commandés de manière électromotrice .
